# EUROPEAN PATENT SPECIFICATION

(11) **EP 0 416 423 B1**
(45) Date of publication and mention of the grant of the patent: **25.10.1995**
(21) Application number: 90116414.5
(22) Date of filing: 27.08.1990
(51) Int. Cl.: H04B 15/04, G06F 1/04

(54) **An arrangement for the attenuation of radiofrequency interferences caused by the harmonics of the clock frequency of digital devices**
Anordnung zur Verminderung von durch Harmonische der Taktfrequenz der numerischen Vorrichtung verursachten Radiofrequenzinterferenzen
Aménagement pour l'atténuation d'interférences de radiofréquences causées par les harmoniques de la fréquence d'horloge de dispositif numérique

(30) Priority: 07.09.1989 FI 894230
(43) Date of publication of application: 13.03.1991
(73) Proprietor: NOKIA TELECOMMUNICATIONS OY, 02600 Espoo (FI)
(72) Inventor: Talarmo, Reino, SF-11100 Riihimäki (FI)
(74) Representative: Herrmann-Trentepohl, Werner, Dipl.-Ing.

(56) References cited:
- EP-A- 0 163 313
- EP-A- 0 326 643
- WO-A-90/00839

## Description

The present invention relates to an arrangement for the attenuation of radio-frequency interferences caused by the harmonics of the clock frequency of digital devices, such as microprocessors, comprising means for modulating a clock signal.

Microprocessors and other digital devices are today used widely in radio devices for performing various operations. In radio telephones, for instance, microprocessors are used particularly for the control of frequency adjustments and signalling. All the operations of the processor take place at a rate determined by a crystal oscillator, whereby high current peaks propagate at regular intervals in the signal lines of the device. These current peaks cause an interference spectrum in which some intense frequency components may fall at the receiving frequencies of the radio device, thus interfering with the signal coming from the radio path. This can usually be observed as an impairment in the sensitivity of the receiver or in the worst case as whistling occurring in the detected signal.

Several methods have been used in an attempt to attenuate interferences caused by the harmonics of the clock frequency of digital devices. For instance, the clock frequency has been decreased to reduce the rates of change of currents flowing in the circuit. This, however, has the drawback that the rate of performance of the computer decreases with decreasing clock frequency, so that the microprocessor is not capable of performing all required operations. In addition, when using standard microprocessors a reduction in the rate of change of signal currents requires additional components and increases the power demand of especially processors and memory circuits utilizing CMOS technique. These factors are both very important in portable mobile telephones in which lightness, small size and small power consumption are aimed at.

Another traditional way of compensating for interferences caused by the microprocessor is to place the interference emitting parts in an electromagnetically sealed encasing and to filter the signals coming to the outside of the encasing. An electromagnetically sealed encasing is, however, difficult as well as expensive to construct in a small space.

Still another approach is to modulate or vary the clock frequency so as to spread the interference peaks caused by the clock signal over wider frequency bands. Such an approach is disclosed in EP-A-0163313.

Still another approach is disclosed in EP-A-0 326 643 which pertains to a method for operating a device having at least one microcomputer circuit and/or integrated circuits wherein the clock frequency is varied according to differing criteria for avoiding interfering radiation from the device which is controlled by clock pulses.

The object of the present invention is to provide a new arrangement which reduces, in the receiver of a radio device, interferences caused by the harmonics of the clock frequency of microprocessors or other similar digital devices required in modern radio devices by modulating the clock signal.

The arrangement according to the invention is characterized by a crystal oscillator for generating a clock signal, a crystal in the crystal oscillator being connected to a serial or parallel resonance circuit in which at least one capacitive component is formed by a capacitance diode the capacitance of which is adjusted by a modulating signal.

In the arrangement according to the invention, interferences caused by the harmonics of the clock frequency are attenuated by spreading the power of sparsely distributed intense dot-frequency interference peaks over a wider frequency band around the original interference peak by modifying the interference spectrum in such a way that the interference energy is distributed more evenly over several radio channels with resultant decrease in the interference power acting on an individual radio channel.

The present invention provides a notable improvement in the attenuation of radio-frequency interferences caused by the microprocessors of radio telephones especially in connection with the electromagnetically sealed encapsulation used previously. Now the requirements set on the encapsulation are not, however, as severe as previously.

In the following the invention will be described in greater detail by means of exemplifying embodiments with reference to the attached drawings, in which
Figure 1 shows a crystal oscillator in which the modulation of the invention is realized;
Figure 2 shows a pseudorandom modulation signal from one clock period; and
Figure 3 illustrates the spreading of interference energy in the frequency domain by means of the arrangement of the invention.

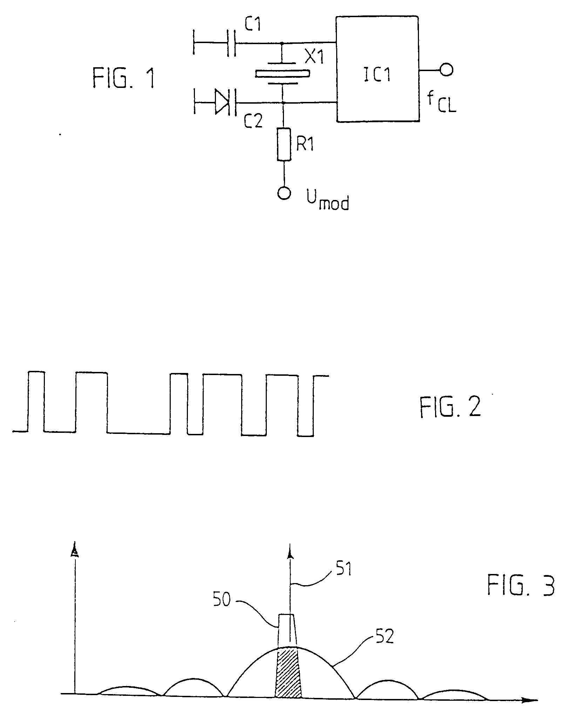

Today the bandwidth of one radio channel in cellular telephone systems is, depending on the system, 12.5 to 30 kHz and the bandwidth of the filters of the receiver is somewhat narrower on account of the filtering requirement of a neighbouring channel. In Figure 3, the reference numeral 50 indicates one radio telephone channel in the frequency domain. The clock-frequency current and/or voltage peaks propagating in the signal lines of the microprocessor of the radio telephone may cause intense interference components that fall on individual frequencies. These interference components are the harmonics of the clock frequency (n x clock frequency). In Figure 3, the reference numeral 51 indicates an intense interference peak falling on the frequency band 50 of the radio channel.

According to the invention the energy of such a dotlike interference frequency can be spread over a wide frequency domain by modifying the clock frequency by modulating the clock signal.

Figure 1 shows a crystal oscillator circuit which can be modulated according to the invention. The crystal oscillator circuit comprises a conventional integrated oscillator circuit IC1 to which an oscillator circuit formed by a crystal X1 of a capacitor C1 and a capacitance diode C2 is connected. The oscillation frequency of the oscillator depends in a known manner on the properties of the crystal X1 as well as on the capacitance values of the capacitor C1 and the capacitance diode C2. In this particular case, the capacitance of the capacitance diode C2 is adjusted by a modulating voltage U_{mod} applied through a resistor R1 between the crystal X1 and the capacitance diode C2. The modulating signal and the type of modulation may be selected according to the requirements in each particular case.

The simplest way is to use frequency modulation (phase modulation) of the clock frequency in such a way that the spectrum of the harmonics of the clock frequency is spread over more than one radio channel. Even a very slight spreading of the spectrum attenuates a whistling-type interference but a more drastic spreading is needed to increase the sensitivity of the receiver. As is well-known, the spectrum of a frequency-modulated signal depends on the modulating signal and the frequency deviation (phase deviation) caused by the modulation.

In cases where the modulating signal U_{mod} is a sinusoidal signal, the modulated signal f_{CL} comprises dotlike frequency components at intervals of the modulation frequency f_{mod}, the relative magnitude of the frequency components with respect to the unmodulated carrier wave depending on the modulation index (phase deviation). Figure 3 illustrates the interference spectrum of a modulated clock frequency by means of an envelope 52. An advantageous interference spectrum is obtained by using a relatively small modulating frequency and a large frequency deviation. The frequency of the modulating signal is preferably e.g. about 1 to 5 kHz and the deviation at the interference frequencies e.g. 10 to 30 kHz.

The modulating signal U_{mod} need not necessarily be a sinusoidal signal. One of the most important alternatives is a pseudorandom word or signal, whereby the modulating signal has a random wave form. Especially when using digital technique, this kind of signal is advantageous in that it is easier to generate than a sinusoidal signal and the form of the spectrum is more advantageous in view of the interferences. When the spreading is performed by a sinusoidal modulating signal, the interference spectrum is emphasized in the vicinity of a frequency corresponding to the frequency deviation, which does not occur when using a pseudorandom signal. When the modulating signal and the length and bit duration of the pseudorandom word are selected suitably, the interference spectrum is similar to, e.g., a MSK (FFSK) signal at the receiving frequencies of the radio device. Figure 2 shows a pseudorandom modulating signal from one clock period.

The effect of the modulation according to the invention on the clock signal can be described in the time domain in such a manner that the significant edges of the clock pulses (rising or falling edge controlling the logic) are displaced in the time domain continuously or in a stepwise manner within predetermined variation limits. It is also possible to modulate both edges of the clock pulses. In cases where the clock frequency of the processor is used for some other than the time critical purpose, for instance, as a reference in the frequency synthesizer of a radio telephone, or to produce a carrier wave for a modem, it is, however, to be preferred to modulate only the significant edges of the clock pulses, whereby the other edges can be used for the above-mentioned purposes, which require a highly stable clock frequency.

The attached figures are only intended to illustrate the present invention. In its details, the arrangement of the invention may vary within the attached claims.

## Claims

1. An arrangement for attenuating interferences caused by the harmonics of the clock frequency of digital devices, such as a microprocessor, comprising means for modulating a clock signal, **characterized** by a crystal oscillator for generating a clock signal, a crystal (X1) in the crystal oscillator being connected to a serial or parallel resonance circuit in which at least one capacitive component is formed by a capacitance diode (C2) the capacitance of which is adjusted by a modulating signal (U_{mod}).

2. An arrangement according to claim 1, **characterized** in that the modulating signal (U_{mod}) is a continuous signal, such as a sinusoidal signal, or a signal having a pseudorandom waveform.

3. Use of an arrangement according to claim 1 or 2 in radio devices, particularly in radio telephones.

## Patentansprüche

1. Anordnung zur Verminderung von durch Harmonische der Taktfrequenz von numerischen Vorrichtungen, wie beispielsweise einem Mikroprozessor, verursachten Interferenzen mit einer Einrichtung zum Modulieren eines Taktsignals, **gekennzeichnet durch** einen Kristalloszillator zum Erzeugen eines Taktsignals, einen Kristall (X1) in dem Kristalloszillator, das mit einem Reihen- oder Parallel-Resonanz-Schaltkreis verbunden ist, in welchem mindestens eine kapazitive Komponente durch eine Kapazitätsdiode (C2) gebildet ist, wobei ihre Kapazität durch ein modulierendes Signal (U_{mod}) eingestellt ist.

2. Anordnung nach Anspruch 1, **dadurch gekennzeichnet, daß** das modulierende Signal (U_{mod}) ein stetiges Signal, wie beispielsweise ein sinusförmiges Signal, oder ein Signal mit einer pseudostatistischen Wellenform ist.

3. Verwendung einer Anordnung nach Anspruch 1 oder 2 in Radiogeräten, insbesondere in Radiotelefonen.

## Revendications

1. Dispositif pour atténuer des interférences provoquées par les harmoniques de la fréquence d'horloge de dispositifs numériques, tels qu'un microprocesseur, comportant un moyen pour moduler un signal d'horloge, caractérisé par un oscillateur à quartz pour générer un signal d'horloge, un quartz (X1) de l'oscillateur à quartz étant connecté à un circuit résonnant en série ou en parallèle dans lequel au moins un composant capacitif est formé par une diode capacitive (C2) dont la capacité est réglée par un signal de modulation (U_{mod}).

2. Dispositif selon la revendication 1, caractérisé en ce que le signal de modulation (U_{mod}) est un signal continu tel qu'un signal sinusoïdal ou un signal ayant une forme pseudo-aléatoire.

3. Utilisation d'un dispositif selon la revendication 1 ou 2 dans des dispositifs radio, en particulier dans des radiotéléphones.
